**Europäisches Patentamt**

**European Patent Office**

**Office européen des brevets**

(19)

(11) Numéro de publication: **0 160 597 B1**

(12) # FASCICULE DE BREVET EUROPEEN

(45) Date de publication du fascicule du brevet:
19.11.87

(51) Int. Cl.⁴: **B 64 D 17/14, B 64 D 17/20**

(21) Numéro de dépôt: **85400622.8**

(22) Date de dépôt: **29.03.85**

(54) **Voilure polymanoeuvrable et procédé de commande d'une telle voilure.**

(30) Priorité: **30.03.84 FR 8405099**

(43) Date de publication de la demande:
**06.11.85 Bulletin 85/45**

(45) Mention de la délivrance du brevet:
**19.11.87 Bulletin 87/47**

(84) Etats contractants désignés:
**AT BE DE GB IT NL SE**

(56) Documents cités:
**FR - A - 1 550 628**
**FR - A - 2 128 573**
**FR - A - 2 408 522**
**GB - A - 144 792**
**GB - A - 1 037 928**
**GB - A - 1 098 379**
**US - A - 2 703 212**
**US - A - 3 343 769**
**US - A - 3 545 704**

**JOURNAL OF AIRCRAFT, vol. 10, no. 11, novembre 1973, pages 678-682; W.B. PEPPER et al.: "An omnidirectional gliding ribbon parachute and control system"**

(73) Titulaire: **AERAZUR EFA, 58, Boulevard Galliéni, F-92130 Issy les Moulineaux (FR)**

(72) Inventeur: **Rousseau, Jacques, Villa Janik 14 rue du Breuil, F-91360 Epinay Sur Orge (FR)**

(74) Mandataire: **Pinguet, André et al, NOVAPAT - CABINET CHEREAU 107 Boulevard Péreire, F-75017 Paris (FR)**

## Description

La présente invention concerne une voiture poly-manoeuvrable et le procédé de commande d'une telle voiture pour des équipements individuels de parachutage destinés soit au sauvetage des passagers ou membres d'équipage d'un aéronef en difficulté, soit à la mise à terre des parachutistes des troupes aéroportées.

On connaît aujourd'hui trois grandes familles de voilures pour personnel destinées aux usages qui viennent d'être évoqués et qui jusqu'à présent — sont des voilures de forme générale hémisphérique:

— les voilures dites pleines non manoeuvrables, c'est-à-dire les voilures généralement non dotées d'orifices d'échappement de l'air au travers de leur coupole et dont la descente dans l'air ambiant est quasi verticale. Ces voilures représentent encore la majorité des voilures en service. Elles présentent l'inconvénient de leur absence de manoeuvrabilité.

— Les voilures dirigeables: ces voilures comportent des coupoles sur lesquelles sont aménagées des découpes appropriées sur leurs faces postérieures plus particulièrement, ou encore des tuyères d'échappement de l'air de sort que l'écoulement ou la portance dissymétrique qui en résulte au plan aérodynamique génère une force résultante dirigée vers l'avant de la voiture engendrant le déplacement de celle-ci dans cette direction. Il est d'usage de dire que ces voilures sont animées d'une vitesse propre d'avancement. Ce type de voiture est connu notamment par le brevet français n. 1 550 628 par le brevet britannique n. 1 037 928 et par le brevet américain n. 3 343 769. Leur dirigeabilité est obtenue par deux comandes de manoeuvre gauche et droite reliées symétriquement à la partie postérieure de leur coupole dans le but de faire tourner la voiture à droite respectivement à gauche quand le parachutiste tractionne vers le bas la commande droite respectivement gauche; de freiner l'avancement de la voiture lorsque le parachutiste tractionne symétriquement les deux commandes.

Si ces voilures présentent l'avantage d'être dirigeables, elles présentent par contre de nombreux inconvénients opérationnels.

Pour ces voilures, la permanence de leur vitesse propre d'avancement est incompatible avec le saut massif à haute densité, en raison de l'augmentation importante de la fréquence des collisions en vol, notamment dans les instants qui suivent l'ouverture des voilures des parachutistes qui viennent de sauter par exemple des deux portes latérales de l'avion largueur. En effet, comme les voilures s'ouvrent dans des directions qui sont réparties de façon aléatoire, il est fréquent que deux voilures s'ouvrent de façon que leur direction d'avancement soient opposées et que par conséquent, les parachutistes viennent se rencontrer sans avoir le temps de réagir.

Par ailleurs, dans les sauts à très faible hauteur, le parachutiste n'a pas toujours le temps de modifier la direction de son déplacement horizontal, par une rotation, pour se présenter à l'atterrissage dans une attitude qui favorise la sécurité puisqu'en général on cherche à atterrir face au vent. Dans le cas où le parachutiste n'a pas réussi à orienter son parachute face au vent par une rotation appropriée, sa vitesse résultante d'entraînement peut être importante, puisqu'elle peut être la somme de la vitesse propre du parachute et de l'intensité du vent.

Enfin, ce type de parachute utilisé comme parachute de sauvetage, peut être la cause d'incidents d'atterrissage. En effet, l'utilisateur, qui n'est pas généralement rompu aux disciplines du saut en parachute et qui de surcroît est souvent sous le coup de traumatismes psychologiques causés par son évacuation de l'aéronef en détresse, n'est pas toujours en mesure ou n'a pas toujours l'automatisme requis pour bénéficier de la manoeuvrabilité de la voiture, afin d'assurer sa sécurité à l'atterrissage en évitant, si nécessaire, certains obstacles au sol, tels que des arbres par exemple, et en se présentant face au vent.

Enfin, si ces parachutes permettent très souvent de réduire è l'atterrissage la vitesse relative d'impact au sol d'une quantité égale à la vitesse propre du parachute, ils présentent par contre l'inconvénient lorsque l'intensité du vent est supérieure à la vitesse propre, d'une prise de contact avec le sol dans le sens opposé à la vitesse résultante d'entraînement.

Enfin, un dernier type de voilures est constitué par les voilures à manoeuvrabilité directionnelle. Ces voilures plus récentes sont celles divulguées par les brevets déposés en France sous les n. 75 19 553 (FR-A-2315435, correspondant au préambule de la revendication 1) et n. 76 07 252 (FR-A-2343650) par la société AERAZUR.

Ces voilures ont l'avantage de ne pas avoir de vitesse propre de façon à accroître considérablement la sécurité des sauts massifs des troupes aéroportées et de ne pas avoir une vitesse d'impact au sol supérieure à la vitesse du vent. De plus, ces voilures permettent une certaine manoeuvrabilité latérale ou axiale puisque par traction généralement de deux commandes de manoeuvre, on peut diminuer la vitesse de déplacement horizontal due au vent relatif et atterrir avec une vitesse résultante d'entraînement moindre.

Toutefois, ces voilures présentent encore deux inconvénients dus à l'absence de manoeuvrabilité rotationnelle. En effet, le parachutiste est souvent orienté dans une direction qui ne lui permet pas toujours de voir les obstacles éventuels au sol sur lesquels il se dirige, et avec ces voilures il n'a pas la possibilité d'effectuer une rotation pour se présenter face aux obstacles. Enfin, à cause de son déplacement horizontal dans une direction aléatoire, l'atterrissage peut avoir lieu dans n'importe quelle direction par rapport à celle de sa vitesse résultante d'entraînement.

La présente invention a pour but de pallier les inconvénients cités ci-dessus tout en conservant les avantages opérationnels des différentes voilures.

Ainsi, un premier but de l'invention est d'obtenir une voiture qui reste neutre et qui permette au parachutiste par traction d'une commande de manoeuvre de modifier à sa guise son orientation pour notamment se placer en configuration vent arrière et de freiner sa vitesse de dérive par traction simultanée de deux commandes de manoeuvre de manière à atterrir dans les conditions de sécurité les plus optimales.

Le premier but est atteint conformément à la partie caractérisante de la revendication 1 par le fait que la voilure polymanoeuvrable comprend au moins trois fenêtres de manoeuvre réparties sur la coupole de façon que la voilure présente un plan principal de symétrie perpendiculaire à la ligne des épaules du parachutiste, chaque fenêtre comportant deux bords, et plusieurs moyens de commande de manoeuvre réalisant un couplage entre deux bords correspondants dans le même sens de parcours circonférentiel de la voilure appartenant à des fenêtres différentes, les bords correspondants des fenêtres étant d'un même côté du plan principal de symétrie.

Selon une autre caractéristique, la voilure comprend quatre fenêtres réparties sur la coupole symétriquement par rapport au plan principal de symétrie perpendiculaire à la ligne des épaules du parachutiste, et par rapport à un deuxième plan de symétrie vertical perpendiculaire au premier plan, deux moyens de commande de manoeuvre reliant le bord interne d'une première fenêtre au bord correspondant d'une deuxième fenêtre disposées symétriquement par rapport au deuxième plan de symétrie.

Selon une autre caractéristique, la voilure comprend une paire de moyens de commande disposée de chaque côté du plan de symétrie principal.

Un autre objet de l'invention est un procédé de commande d'une voilure polymanoeuvrable.

Ce but est atteint conformément à la revendication 5 par le fait que le parachutiste exerce une traction sur un seul moyen de commande pour provoquer une rotation dans le sens correspondant au côté dans lequel est situé le moyen de commande sur lequel on exerce une traction.

Par le fait que le parachutiste exerce une traction sur une paire de moyens de commande situés de part et d'autre du plan de symétrie principal et d'un même côté d'un plan perpendiculaire à ce plan principal pour provoquer un freinage ou déplacement axial du parachute;

— et par le fait que le prachutiste exerce une traction sur une paire de moyens de commande situés d'un même côté du plan de symétrie principal pour provoquer un freinage ou déplacement latéral.

Ainsi, comme on peut le constater, la polymanoeuvrabilité du parachute, qui lui confère sa polyvalence d'emploi, sont mises en oeuvre par le parachutiste uniquement au moyen de quatre commandes de manoeuvre.

D'autres caractéristiques et avantages de la présente invention ressortiront plus clairement de la description qui suit faite en référence aux dessins annexés dans lesquels:

la figure 1 représente une vue de dessus schématique d'une voilure à manoeuvraibilité rotationnelle dans sa position neutre, c'est-à-dire sans aucune action sur les commandes de manoeuvre;

la figure 2 représente une vue de dessus de la même voilure lorsque celle-ci subit une traction vers le bas de la commande droite provoquant une rotation à droite;

la figure 3 représente une vue de dessus de la même voilure lorsque celle-ci subit une traction vers le bas de la commande gauche provoquant une rotation à gauche;

la figure 4 représente une vue de dessus de la même voilure lorsqu'une traction vers le bas des deux commandes provoque un freinage ou déplacement arrière;

la figure 5 représente une vue de dessus d'une voilure polymanoeuvrable dans la situation où celle-ci se comporte comme une voilure neutre;

la figure 6 représente une vue de dessus de la voilure polymanoeuvrable lorsque celle-ci subit une traction vers le bas de la commande provoquant une rotation à droite;

la figure 7 représente une vue de dessus de la voilure polymanoeuvrable lorque celle-ci subit une traction arrière vers le bas des commandes provoquant un freinage ou déplacement;

la figure 8 représente une vue de dessus de la voilure polymanoeuvrable lorsque celle-ci subit une traction vers le bas des commandes provoquant un freinage ou déplacement transversal;

la figure 9 représente une vue de devant de la voilure de la figure 1 dans sa configuration neutre;

la figure 10 représente une vue de devant de la voilure correspondant à la situation de la figure 3;

la figure 11 représente une vue arrière de la voilure correspondant à la situation de la figure 4.

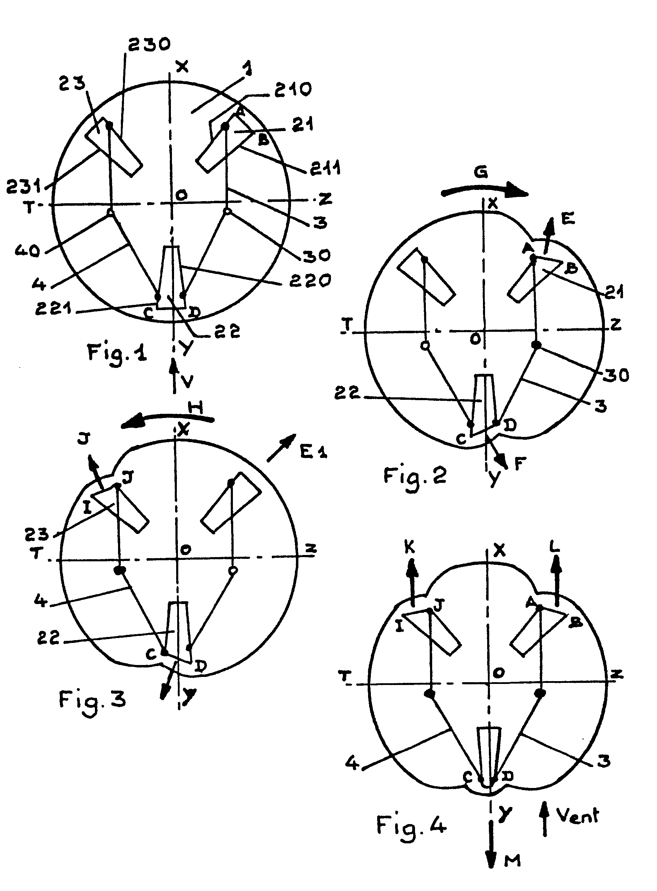

La figure 1 représente une vue de dessus d'une voilure 1 hémisphérique pourvue de trois fenêtres réparties de façon symétrique par rapport à un plan de symétrie XY matérialisant la direction avant-arrière du parachutiste, le demi-axe OX matérialisant le côté avant du parachute/parachutiste.

Contrairement à ce que laisse supposer la figure, les trois fenêtres ne sont pas nécessairement réparties suivant des angles privilégiés mais sont simplement disposées de façon symétrique par rapport à ce plan XY. Les trois fenêtres 21, 22 et 23 comportent chacune deux bords opposés substantiellement parallèles aux fuseaux de la voilure hémisphérique. Comme on peut le voir sur la figure 1, une drisse de commande 3 comportant à son extrémité une poignée de comande 30 permet de relier le bord 210 de la fenêtre 21, qui est plus proche de l'axe de symétrie XY, au bord 220 de la fenêtre 22, qui est en arrière de l'axe de symétrie TZ perpendiculaire à l'axe de symétrie XY et situé du même côté du plan XY. Une deuxième drisse 4 permet de relier le bord 230 de la fenêtre 23, qui est le bord le plus proche de l'axe de symétrie XY avec le bord 221 de la fenêtre 22, qui est le bord situé du même côté du plan XY que la fenêtre 23. Cette drisse de commande 4 porte en son centre une poignée de commande 40. Il est bien évident que chacune des drisses 3 et 4 peut être constituée par un seul brin on deux brins formant un V et reliée à une drisse qui descend jusqu'au niveau du parachutiste de façon à ce que celui-ci puisse l'actionner.

Sur la figure 2, on voit une vue de dessus de la voilure suite à une traction du parachutiste sur la drisse 3 par l'intermédiaire de la poignée 30. Comme on peut le comprendre, l'axe TZ matérialise égalment la ligne des épaules au parachutiste et la direction OX l'avant, c'est-à-dire la direction vers laquelle regarde normalement le parachutiste. Suite à la traction sur la drisse 3 le segment AB de la fenêtre 21 qui sur la figure 1 avait substantiellement une direction suivant un angle de 45° par rapport au plan TZ va pivoter et former avec la ligne TZ un angle bien inférieur à 45° comme représenté sur la figure 2. De cette façon, l'orientation initiale du plan formé par la bordure de la fenêtre sera modifié et sa nouvelle orientation, obligera l'air à s'écouler au travers de la fenêtre selon une nouvelle orientation E davantage parallèle à l'axe XY. De même, le bord CD de la fenêtre 22 va également être entraîné par la drisse à poivoter de façon à faire un angle avec l'axe TZ alors que dans la position de repos il se trouvait parallèle à l'axe TZ. La modification simultanée des orientations des fenêtres 21 et 22 fait que les écoulements d'air respectifs E et F génèrent par réaction des forces de même direction mais de sens opposés à E et F qui ne passent plus par le centre 0 de la voilure et par conséquent, génèrent un couple moteur entraînant la rotation de la voilure suivant la direction matérialisée par la flèche G. Ce couple de rotation est d'une intensité double de celui produit par la déformation d'une simple fenêtre 21. Par conséquent et toute chose égale par ailleurs, par rapport aux voilures rationnelles de type classique, la traction sur une simple drisse permet d'obtenir un taux de rotation de la voilure notablement plus important qui peut atteindre le double.

La figure 3 représente une vue de dessus de la même voilure dans laquelle le parachutiste actionne la drisse 4 qui provoque une déformation du bord CD de la fenêtre 22 et du bord IJ de la fenêtre 23 de façon à provoquer une rotation en sens inverse de la flèche J, rotation représentée par la flèche H.

Comme on peut le voir sur ce type de voilure, la traction sur le côté gauche provoque une rotation à gauche matérialisée par la flèche H et la traction sur le côté droit provoque une rotation à droite matérialisée par la flèche G. La figure 4 montre qu'une traction simultanée des drisses 3 et 4 déformant les fenêtres 21 et 23 de façon symétrique et la fenêtre 22 de façon à réduire sa base CD. Les écoulements L et K qui résultent des déformations du plan des fenêtres 21 et 23 créant une force de réaction résultante de direction XY et de sens OY dont l'intensité est pratiquement le double de celle créée par l'écoulement M et qui s'exerce dans le sens OX. La réaction résultante de sens OY aura pour effet de mouvoir la voilure dans le même sens, c'est-a-dire vers l'arrière.

Ainsi, le parachutiste qui après s'être orienté en configuration vent arrière par traction d'une seule drisse de manoeuvre 3 ou 4 pourra sur une traction simultanée de ces 2 drisses réduire la vitesse d'entraînement et se présenter ainsi à l'atterrissage dans les conditions les plus optimales pour sa sécurité.

Comme on le comprend sur les différentes vues schématisées, un point noir sur les drisses signifie que l'on est en train de tirer sur la drisse correspondante, tandis qu'un rond blanc signifie que la drisse ne subit aucune traction et que par conséquent, les bords auxquels sont attachées les extrémités de la drisse ne subissent aucune déformation.

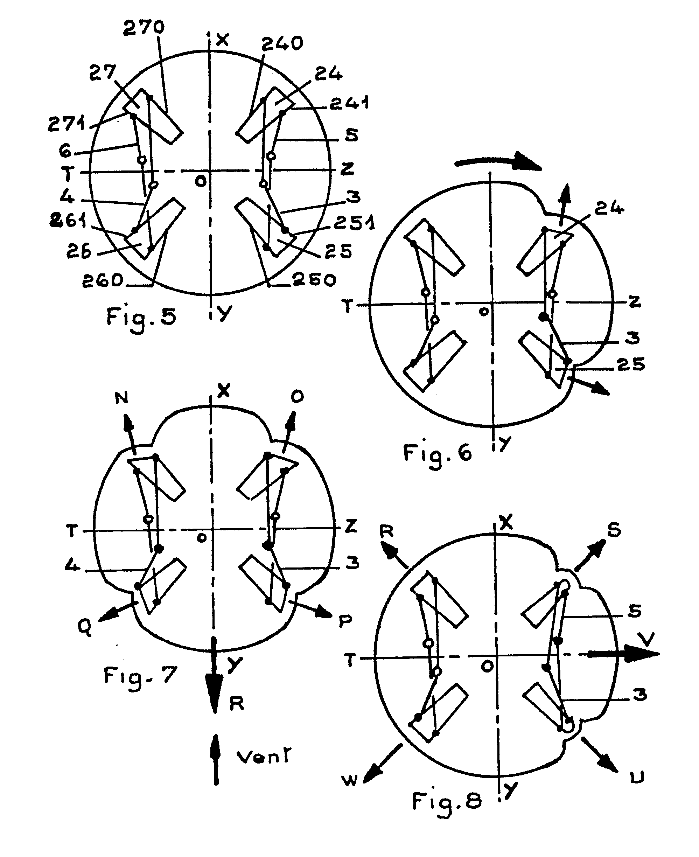

La figure 5 représente une vue de dessus schématique d'une voilure polymanoeuvrable dont la configuration lui assure une manoeuvrabilité parfaite.

Cette voilure comporte quatre fenêtres 24 et 27 réparties de façon symétrique par rapport à l'axe XY et par rapport à l'axe TZ matérialisant la ligne des épaules du parachutiste. Le demi-axe OX représentant le côté avant du parachute, c'est-à-dire la direction vers laquelle est orienté normalement le visage du parachutiste.

Les fenêtres situées d'un même côté du plan XY, sont reliées par des systèmes de drisse. Comme on peut le voir sur la figure 5, le bord interne 240 de la fenêtre 24 est relié au bord externe 251 de la fenêtre 25 par une drisse 3. Cette disposition est substantiellement identique à la disposition de la figure 1. De même une drisse 4 relie le bord interne 270 de la fenêtre 27 au bord externe 261 de la fenêtre 26. Comme on l'a déjà expliqué précédemment, les drisses 3 et 4 sont de longueur suffisante pour qu'elles soient à portée des mains du parachutiste. De même, une drisse 5 relie le bord externe 241 de la fenêtre 24 au bord interne 250 de la fenêtre 25. Enfin, une drisse 6 relie le bord externe 271 de la fenêtre 27 au bord interne 260 de la fenêtre 26. Les drisses 5 et 6 comme les drisses 3 et 4 sont de longueur suffisante pour être à portée de main du parachutiste de façon à ce que celui-ci puisse les tractionner pour déformer les fenêtres. De façon connue, ces drisses peuvent être constituées d'un seul morceau ou de deux brins formant un V ces brins en V étant si nécessaire prolongés par une sous-drisse qui donne à l'ensemble la longueur suffisante pour arriver à la hauteur des mains du parachutiste. De façon également connue, cette sous-drisse ou la drisse peut comporter une poignée de préhension pour faciliter la manoeuvre.

La figure 6 représente la forme prise par la voilure suite à une traction sur la drisse 3, traction représentée par un point noir. Cette traction déforme de la façon expliquée précédemment les fenêtre 24 et 25 et provoque comme on l'a déjà expliqué à l'occasion de la figure 2 une rotation de la voilure.

La figure 7 représente la forme prise par la voilure et les fenêtres lorsque l'on exerce une traction sur les drisses 3 et 4 reliées au bord interne des fenêtres avant. Sur cette figure, on a représenté par les flèches N, O, P et Q les résultantes des échappements provoqués par les déformations des fenêtres et par la flèche R la force motrice qui résulte de ces échappements. Comme on peut le constater, lorsque le parachutiste s'est orienté vent arrière, cette résultance R est de direction opposée à celle du vent et contribue donc à réduire la vitesse d'entraînement de la voilure par le vent. En conséquence, la voilure est freinée.

La figure 8 représente la forme prise par la voilure et les fenêtres lorsque l'on soumet les drisses situées d'un même côté du plan de symétrie XY, à une traction. Dans l'exemple de la figure 8 ce sont les drisses 3, 5 qui sont concernées, et qui rétrécissent les orifices des fenêtres de façon à engendrer des écoulements S, U d'intensité moins importante que celle des écoulements R et W de l'air au travers des fenêtres non déformées. La force de réaction qui résulte de ces 4 écoulements et qui est représentée par la flèche V oblige donc la voilure à se déplacer dans le même sens, c'est-à-dire latéralement à droite. Ainsi, en tirant sur les drisses situées d'un même côté d'une épaule, ou d'un même côté de l'axe XY, on provoque un déplacement latéral de la voilure comme indiqué par la figure 8. Si au lieu de choisir, les drisses 3, 5 on avait choisi les drisses 4, 6 le déplacement de la voilure se serait effectué dans la direction du demi-axe OT.

Il est bien évident que dans le cas de la figure 7 où le parachutiste est en configuration vent arrière si l'on avait tiré sur les drisses 5 et 6 au lieu de tirer sur les drisses 3 et 4 le parachute se serait mis à avancer avec le vent et aurait donc subi une acccélération au lieu de subir un freinage. Ainsi, dans cette configuration en tirant sur les deux drisses reliées au bord interne des fenêtres avant, on freine le parachute alors que si l'on tire sur les drisses reliées au bord externe des fenêtres avant de la voilure on accélère le parachute. Par contre, en tirant sur les drisses situées d'un même côté du plan de symétrie XY, on provoque un déplacement latéral de la voilure, qui lorsque le vent agit dans cette direction permet soit de freiner ou d'accélérer la voilure. Enfin, en tirant sur une seule drisse et de préférence la drisse reliée au bord interne de la fenêtre avant, on provoque une rotation dont le sens est donné par le demi-plan dans lequel se situe la drisse sur laquelle on a tiré. Ainsi, en tirant la drisse 3 qui est située dans le demi-plan droit par rapport au plan XY, on provoque une rotation à droite, par contre en tirant sur la drisse 4 reliée au bord interne de la fenêtre avant gauche, on provoque une rotation à gauche. Par contre, si l'on tire sur la drisse droite 5 reliée au bord externe de la fenêtre avant droite, on provoquera une rotation à gauche de même si on tire sur la drisse gauche 6 reliée au bord externe de la fenêtre avant gauche de la voilure on provoquera une rotation à droite. Donc dans le cas où on tire sur les drisses reliées au bord externe des fenêtres avant on inverse les sens des rotations par rapport au côté des drisses sur lesquelles on tire.

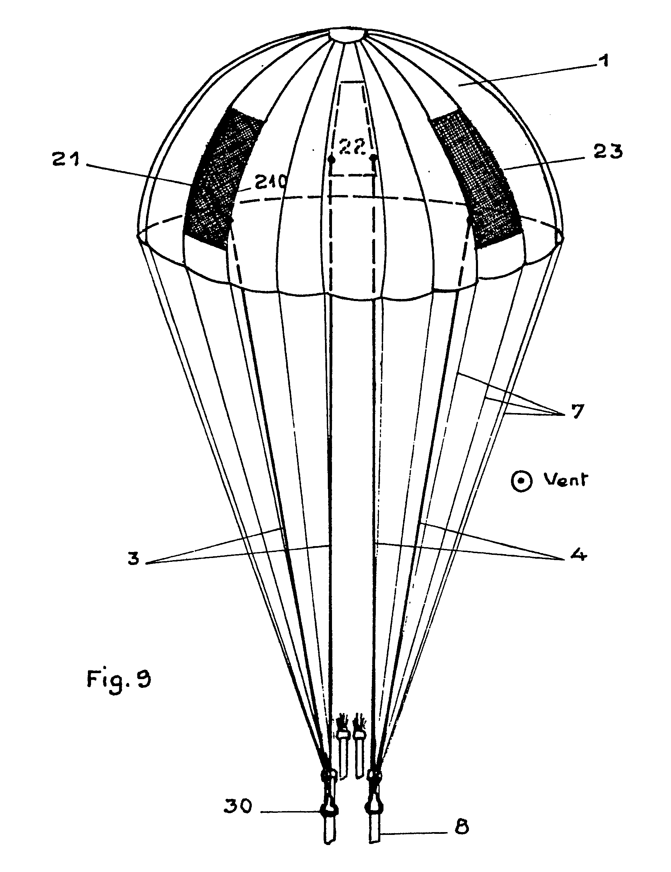

La figure 9 représente une vue latérale avant de la voilure de la figure 1 lorsque celle-ci se comporte de façon neutre. Les suspentes de sustentation 7 relient les bords de la voilure 1 au harnais 8 du parachutiste. Les fenêtres 21 à 23 sont découpées dans les fusseaux et peuvent occuper si nécessaire la largeur d'un ou plusieurs fuseaux ou panneaux de fuseau. Les drisses de manoeuvre 3, 4 sont reliées aux bords des fenêtres 21, 22, 23 dans la moitié inférieure de ces fenêtres, comme le montre la figure 1. La drisse 3 forme un V au bout duquel se trouve l'anneau de traction 30 ou encore la poingée de manoeuvre.

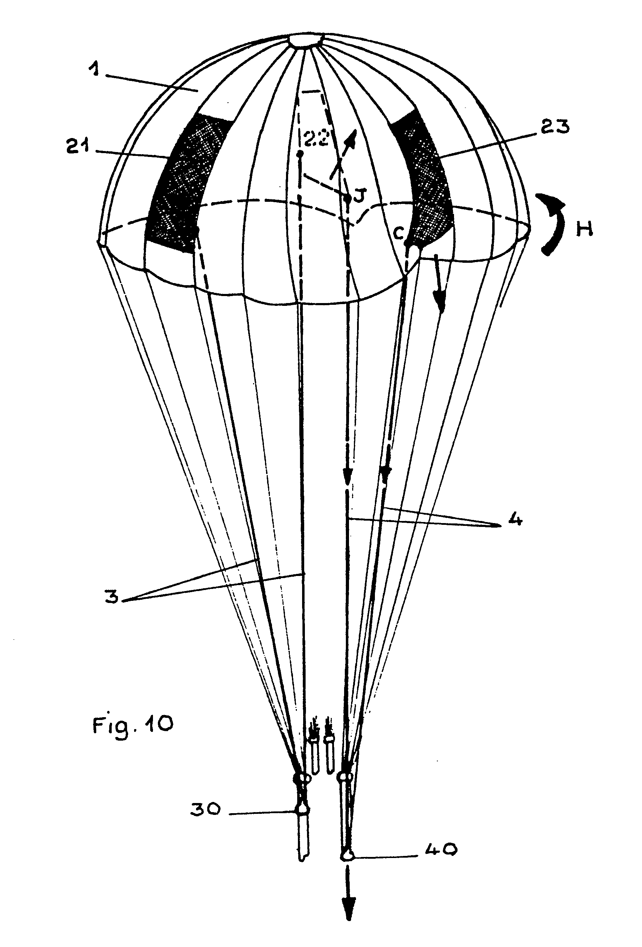

La figure 10 représente une vue latérale avant de la voilure de la figure 1, dans le cas où celle-ci est entraînée en rotation à guache comme représenté en figure 3. Comme on peut le voir, une traction sur la poignée 40 et par conséquent la drisse de manoeuvre gauche 4, provoque l'avancement vers l'intérieur des points J et C et par conséquent un pivotement de la surface des fenêtres en direction du centre 0 de la voilure. Ce pivotement a pour résultat de modifier la direction des résultances d'écoulement d'air, comme indiqué sur la figure 3, de façon que celles-ci ne passent plus par le centre 0, alors que la résultance E1 de l'écoulement de l'air de la fenêtre 21 de la figure 3 passe encore par le point 0. Ainsi, les pivotements des fenêtres 23 et 22 dûs aux déplacements des points C et J vers l'intérieur a pour résultat une modification du sens de l'écoulement de l'air au travers de chacune de ces fenêtres qui donne naissance à une mise en rotation de la voilure dans le sens de la flèche H.

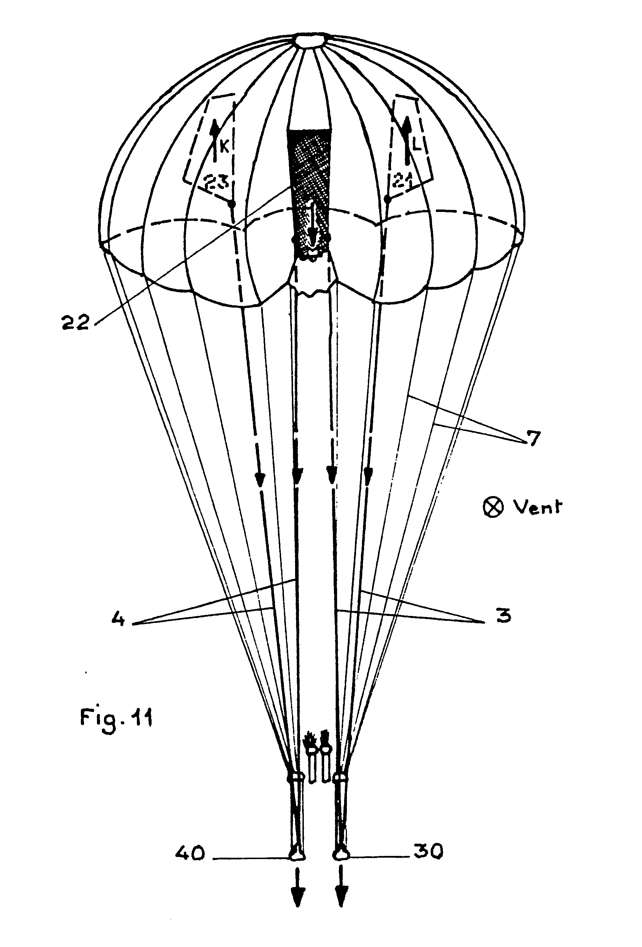

La figure 11 représente une vue latérale arrière de la voilure de la figure 1 dans le cas où celle-ci subit une traction sur ses deux drisses de commande 3, 4 comme représenté à la figure 4. Le vecteur matérialisant le sens d'action du vent est représenté par une flèche vue de l'arrière. Sur cette figure, on constate le rétrécissement de la partie inférieure de la fenêtre arrière 22, ce qui diminue l'écoulement de l'air vers l'arrière M cependant que les déformations des fenêtres 21 et 23 augmentent l'intensité axiale de la résultante due aux écoulements L et K. La réaction résultant de ces 3 écoulements est un vecteur de même direction que le vent mais de sens opposé et par conséquent la voilure est ralentie dans son mouvement d'entraînement dû au vent.

Comme on peut le comprendre, à la lumière des explications précédentes, on a ainsi constitué une voilure, qui sans action sur les drisses se comporte de façon parfaitement neutre et qui suivant les actions sur les drisses peut subir une rotation, un freinage, une accélération ou un déplacement latéral ou axial, ce qui correspond parfaitement à la définition d'une voilure polymanoeuvrable.

Bien que les fenêtre représentées sur les exemples soient trapézoidale ou ractangulaire, l'invention n'est nullement limitée à cette forme et s'applique tout aussi bien à des fenêtres triangulaires ou plus généralement à toute fenêtre de forme polygonale ou non, même si la fenêtre ne comporte pas d'axe de symétrie.

La présente invention n'est pas limitée sux exemples de réalisation qui viennent d'être déscrits, elle est au contraire susceptible de modifications et de variantes qui apparaîtront à l'homme de l'art dans le cadre des revendications qui suivent.

**Revendications**

1. Voilure polymanoeuvrable constituée d'une coupole et d'un ensemble de fenêtres manoeuvrable par le parachutiste, pour faire affectuer à l'ensemble les différents mouvements souhaités, caractérisée en ce qu'elle comprend:
   — au moins trois fenêtres de manoeuvre réparties sur la coupole de façon que la voilure représente un plan principal de symétrie vertical XY perpendiculaire à la ligne des épaules TZ, du parachutiste, chaque fenêtre (21, 22, 23) comportant deux bords (210, 211; 220, 221; 230, 231) et
   — plusieurs moyens de commande de manoeuvre (3, 4) réalisant un couplage entre deux bords correspondants (210, 220 et 230, 221) dans le même sens de parcours circonférentiel de la voilure appartenant à des fenêtres différentes (21, 22 et 23, 22) les bords correspondants des fenêtres étant situés d'un même côté du plan principal de symétrie XY.

2. Voilure polymanoeuvrable selon la revendication 1, caractérisé en ce qu'elle comprend:
   — quatre fenêtres (24, 25, 26, 27) réparties sur la coupole de façon symétrique par rapport au plan principal de symétrie XY perpendiculaire à la ligne des épaules TZ du parachutiste et par rapport à un deuxième plan de symétrie vertical TZ.

— deux moyens de commande de manoeuvre (3, 4) reliant le bord interne (240, 270) d'une première fenêtre (24, 27) au bord correspondant (251, 261) d'une deuxième fenêtre (25, 26) disposées symétriquement par rapport au deuxième plan de symétrie TZ.

3. Voilure polymanoeuvrable selon la revendications 1, caractérisée en ce qu'elle comprend:

— quatre fenêtres (24, 25, 26, 27) réparties sur la coupole de façon symétrique par rapport au plan principal de symétrie XY perpendiculaire à la ligne des épaules TZ du parachutiste et par rapport à un deuxième plan de symétrie vertical TZ.

— deux moyens de commande de manoeuvre (5, 6) reliant le bord externe (241, 171) d'une première fenêtre (24, 27) au bord correspondant (251, 261) d'une deuxième fenêtre (25, 26) disposées symétriquement par rapport au deuxième plan de symétrie TZ.

4. Voilure polymanoeuvrable selon la revendication 1, caractérisée en ce qu'elle comprend:

— quatre fenêtres (24, 25, 26, 27) réparties sur la coupole de façon symétrique par rapport au plan principal de symétrie XY perpendiculaire à la ligne des épaules TZ du parachutiste et par rapport à un deuxième plan de symétrie vertical TZ,

— des premiers moyens de commande de manoeuvre (3, 4) reliant un premier bord interne (240, 270) d'une première fenêtre (24, 27) au deuxième bord correspondant (251, 261) d'une deuxième fenêtre (25, 26) disposées symétriquement par rapport au deuxième plan de symétrie TZ, et

— des seconds moyens de commande (5, 6) reliant le deuxième bord externe (241, 171) d'une première fenêtre (24, 27) au premier bord interne (250, 260) de la deuxième fenêtre (25, 26).

5. Procédé de commande d'une voilure polymanoeuvrable selon l'une des revendications précédentes, par un parachutiste, caractérisé en ce que le parachutiste exerce une traction sur un seul moyen de commande pour provoquer une rotation dans le sens correspondant au côté dans lequel est situé le moyen de commande par rapport au plan de symétrie principal XY; le parachutiste exerce une traction par une paire de moyens de commande situés d'un même côté par rapport au plan de symétrie principal XY pour provoquer un déplacement latéral; le parachutiste exerce une traction sur une paire de moyens de commande situés de part et d'autre du plan de symétrie principal XY, pour provoquer un déplacement axial du parachute.

**Patentansprüche**

1. Vielfach manövrierbare Fallschirmkappe mit einer vom Fallschirmspringer bedienbaren Gruppe von Fenstern, um mit der Gruppe der Fenster die verschiedenen gewüschten Bewegungen ausführen zu können, gekennzeichnet durch mindestens drei zur Manövrierfähigkeit bestimmte Fenster, die über die Fallschirmkappe verteilt sind, wobei die Fallschirmkappe eine vertikale Hauptsymmetrie-Ebene XY aufweist, die senkrecht zur Schulterlinie TZ des Fallschirmspringers vorgesehen ist und wobei die Fenster (21, 22, 23, 24) zwei Ränder (210, 211; 220, 221; 230, 231) aufweisen und mehrere Steuereinrichtungen (3, 4) für die Manövrierfähigkeit, die eine Kopplung zwischen zwei entsprechenden Rändern (210, 220 und 230, 221) realisieren, die im gleichen Sinne wie die Umfangsstrecke der Fallschirmkappe zu den unterschiedlichen Fenstern (21, 22 und 23, 22) gehören, wobei die entsprechenden Ränder der Fenster auf der gleichen Seite der Hauptsymmetrie-Ebene XY vorgesehen sind.

2. Fallschirmkappe nach Anspruch 1, gekennzeichnet durch vier Fenster (24, 25, 26, 27), die im Verhältnis zur Hauptsymmetrie-Ebene XY, die senkrecht zur Schluterlinie TZ des Fallschirmspringers liegt und im Verhältnis zu einer zweiten, vertikalen Symmetrie-Ebene TZ symmetrisch auf der Fallschirmkappe vorgesehen sind, und zwei Steuereinrichtungen (3, 4) zur Manövrierbarkeit, die den inneren Rand (240, 270) eines ersten Fensters (24, 27) mit einem entsprechenden Rand (251, 261) eines zweiten Fensters (25, 26) verbinden, wobei diese Fenster symmetrisch bezüglich der zweiten Symmetrie-Ebene TZ vorgesehen sind.

3. Fallschirmkappe nach Anspruch 1, gekennzeichnet durch vier Fenster (24, 25, 26, 27), die auf der Fallschirmkappe symmetrisch bezüglich der Hauptsymmetrie-Ebene XY, die senkrecht zur Schulterlinie TZ des Fallschirmspringers liegt, und symmetrisch bezüglich einer zweiten vertikalen Symmetrie-Ebene TZ verteilt sind, und zwei Steuereinrichtungen (5, 6) zur Manövrierbarkeit, die den äussreren Rand (241, 271) des ersten Fensters (24, 27) mit dem entsprechenden Rand (251, 261) eines zweiten Fensters (25, 26) verbinden, wobei die verbundenen Fenster symmetrisch hinsichtlich der zweiten Symmetrie-Ebene TZ angeordnet sind.

4. Fallschirmkappe nach Anspruch 1, gekennzeichnet durch vier Fenster (24, 25, 26, 27), die auf der Fallschirmkappe symmetrisch bezüglich der Hauptsymmetrie-Ebene XY, die senkrecht zur Schulterlinie TZ des Fallschirmspringers liegt, und symmetrisch zu einer zweiten vertikalen Symmetrie-Ebene TZ verteilt sind, mit ersten Steuereinrichtungen (3, 4) zur Manövrierbarkeit, die einen ersten inneren Rand (240, 270) eines ersten Fensters (24, 27) mit einem entsprechenden Rand (251, 261) eines zweiten Fensters (25, 26) verbinden, wobei die Fenster symmetrisch hinsichtlich der zweiten Symmetrie-Ebene TZ angeordnet sind, und mit zweiten Steuereinrichtungen (5, 6), die den zweiten äussern Rand (241, 271) des ersten Fensters (24, 27) mit dem ersten inneren Rand (250, 260) des zweiten Fensters (25, 26) verbinden.

5. Steuerverfahren für einen Fallschirmspringer für eine vielfach manövrierbare Fallschirmkappe nach einem der vorausgehenden Ausprüche, dadurch gekennzeichnet, dass der Fallschirmspringer einen Zug auf nur ein Steuermittel ausübt, um eine Drehung in die Richtung der Seite hervorzurufen, auf der die Steuereinrichtung bezüglich der Hauptsymmetrie-Ebene XY liegt, dass der Fallschirmspringer mittels eines Zuges auf ein Paar Steuermittel, die auf der gleichen Seite bezüglich der Hauptsymmetrie-Ebene XY vorgesehen sind, eine Verschiebung in Querrichtung erreicht, und dass der Fallschirmspringer einen Zug auf ein Paar Steuermittel zur Bewirkung einer Verschiebung des Fallschirms in Axialrichtung ausübt, wobei die Steuermittel teilweise auf der einen und teilweise auf der anderen Seite zur Hauptsymmetrie-Ebene XY vorgesehen sind.

## Claims

1. A polymanoeuvrable airfoil comprising a dome and a group of windows which can be actuated upon by the parachutist in order to cause the group making various desired movements, including:
— at least three working windows distributed on said dome in such a way that the airfoil shows a main plane of XY vertical symmetry normal to the TZ parachutist's shoulder line, each window (21, 22, 23) including two edges (210, 211; 220, 221; 230, 231) and
— several working control means (3, 4) coupling two corresponding edges (210, 220 and 230, 221) along the same circumferential path direction of the airfoil belonging to different windows (21, 22 and 23, 22), said corresponding window edges lying at the same side of the XY symmetry main plane.

2. The airfoil as recited in claim 1, including:
— four windows (24, 25, 26, 27) symmetrically distributed on the dome with regard to the XY symmetry main plane normal to the TZ parachutist's shoulder line and with regard to a TZ second vertical symmetry plane;
— two working control means (3, 4) connecting the internal edge (240, 270) of a first window (24, 27) to the corresponding one (251, 261) of a second window (25, 26) symmetrically arranged with regard to said TZ second symmetry plane.

3. The airfoil as recited in claim 1, including:

— four windows (24, 25, 26, 27) symmetrically distributed on the dome with regard to the XY symmetry main plane normal to the TZ parachutist's shoulder line and with regard to a TZ second symmetry vertical plane;
— two working control means (5, 6) connecting the external edge (241, 171) of a first window (24, 27) to the corresponding one (251, 261) of a second window (25, 26) symmetrically arranged with regard to said TZ second symmetry plane.

4. The airfoil as recited in claim 1, including:
— four windows (24, 25, 26, 27) symmetrically distributed on the dome with regard to the XY symmetry main plane normal to the TZ parachutist's shoulder line and with regard to a TZ second vertical symmetry plane;
— first working control means (3, 4) connecting a first internal edge (240, 270) of a first window (24, 27) to the corresponding one (251, 261) of a second window (25, 26) symmetrically arranged with regard to said TZ second symmetry plane, and,
— second working control means (5, 6) connecting said second external edge (241, 171) of said first window (24, 27) to said first internal edge (250, 260) of said second window (25, 26).

5. A process for controlling a polymanoeuvrable airfoil as recited in any preceding claim, through a parachutist, including the following steps: said parachutist exerts a pulling action on a single control means in order to cause a rotating movement in a direction corresponding to the side where lies said control means with regard to the XY main symmetry plane; said parachutist exerts a pulling action through a pair of control means lying at the same side with regard to the XY main symmetry plane to cause a lateral movement; said parachutist exerts a pulling action on a pair of control means lying on each side of the XY main symmetry plane in order to cause the parachute to be laterally displaced.

Fig.1

Fig.2

Fig.3

Fig.4

Fig. 5

Fig. 6

Fig. 7

Fig. 8

Fig. 9

⊙ Vent

Fig. 10

Fig. 11

⊗ Vent